# FASCICULE DE BREVET EUROPEEN

(11) **EP 3 267 231 B1**
(45) Date de publication et mention de la délivrance du brevet: **18.07.2018**
(21) Numéro de dépôt: 17174945.0
(22) Date de dépôt: 08.06.2017
(51) Int. Cl.: G02B 6/42, G02B 6/38

(54) **FICHE DE CONNEXION A UNE EMBASE DE PANNEAU DE BOITIER D'EQUIPEMENT ELECTRONIQUE, MUNIE DE MOYENS D'ANTI-CASSE DE CÂBLE OPTIQUE SUR LEQUEL LA FICHE EST MONTEE**
STECKERSTIFT ZUR VERBINDUNG MIT EINER BUCHSE EINES GEHÄUSEPANEELS EINES ELEKTRONISCHEN GERÄTS, DER MIT BRUCHSCHUTZMITTELN FÜR DAS OPTISCHE KABEL AUSGESTATTET IST, AN DEM DER STECKER MONTIERT IST
CONNECTION PLUG WITH A BASE OF A HOUSING PANEL OF ELECTRONIC EQUIPMENT, PROVIDED WITH MEANS TO PREVENT THE BREAKAGE OF THE OPTICAL CABLE ON WHICH THE PLUG IS FITTED

(30) Priorité: 07.07.2016 FR 1656520
(43) Date de publication de la demande: 10.01.2018
(73) Titulaire: RADIALL, 93300 Aubervilliers (FR)
(72) Inventeur: DUPEUX, Benoit, 38470 VATILIEU (FR); BOURGEAS, Fabien, 38500 SAINT NICOLAS DE MACHERIN (FR); LOMUSCIO, Dominique, 38590 SILLANS (FR)
(74) Mandataire: Nony

(56) Documents cités:
- WO-A1-2012/101569
- US-A1- 2004 240 801
- US-A1- 2005 018 979

## Description

### Domaine technique

La présente invention concerne une fiche destinée à être montée sur un câble optique comportant au moins un conducteur optique supportant un ou plusieurs contacts, et à être connectée à une embase d'un panneau de boitier d'un équipement électronique.

L'invention s'applique en particulier pour les fiches de connexion aux embases d'équipements électroniques qui mettent en oeuvre plusieurs voies optiques avec des connexions, que l'on retrouve en environnement extérieur et/ou en conditions sévères notamment dans les installations de télécommunications telles que des antennes-relais de téléphonie mobile, dans les réseaux de transmission de données à haut débit vers l'habitat ou l'industrie, dans les réseaux de caméras de surveillance ou encore pour la transmission de données dans des installations ferroviaires.

### Art antérieur

Il est connu d'utiliser des fiches à voie optique comportant un convertisseur optoélectronique de type SFP ou SFP+ par exemple, encore appelé *transceiver* en anglais. Dans les fiches connues, le convertisseur optoélectronique est usuellement porté par une embase rapportée sur un panneau de boitier d'équipement électronique dont une carte de circuit imprimé supporte le convertisseur optoélectronique, comme décrit par exemple dans la demande de brevet WO 2009/100796.

Cet agencement du convertisseur optoélectronique à l'intérieur de l'embase présente plusieurs inconvénients.

Tout d'abord, la dissipation de chaleur générée dans le convertisseur optoélectronique peut ne pas être satisfaisante.

En outre, une sortie du convertisseur optoélectronique est destinée à être connectée à un ou plusieurs contacts optiques portés par une fiche. La connexion entre contacts optiques et le convertisseur optoélectronique peut ne pas être aisée.

Par ailleurs, l'intégration du convertisseur optoélectronique à l'embase rend plus difficile l'accès manuel au dispositif de déverrouillage des contacts optiques de la fiche. Il peut alors s'avérer nécessaire d'avoir recours à un dispositif permettant de synchroniser le déverrouillage des contacts optiques et le déverrouillage de la fiche.

En outre, avec une embase comportant un convertisseur optoélectronique intégré, il peut s'avérer complexe d'obtenir un alignement satisfaisant entre l'interface électrique de la fiche et celui de l'embase, en dépit des tolérances prévues par les fabricants.

Il peut également s'avérer difficile d'adapter une embase avec convertisseur optoélectronique intégré à différents standards d'interface optique telles que des interfaces optiques utilisant des contacts LC ou SC.

Pour remédier à tous ces inconvénients, la demanderesse a proposé dans la demande de brevet WO 2012/101569 de fixer de manière amovible au moins un convertisseur optoélectronique à l'intérieur du corps de la fiche, une partie du convertisseur faisant saillie à l'avant du corps.

Si cette solution est globalement satisfaisante, les inventeurs ont pu constater qu'il subsistait dans une telle fiche optique, un risque de casse du ou des conducteurs optiques. En effet, sans avoir pris la précaution préalable d'avoir accès physiquement aux contacts optiques connectés au convertisseur optoélectronique, un utilisateur peut exercer une traction non souhaitable sur le câble optique et/ou sur le convertisseur pour séparer ce dernier du corps de la fiche. L'effort de traction est répercuté sur le(s) conducteur(s) optique(s) supportant le(s) contacts optique(s), et la connexion entre ces derniers et le convertisseur étant mécaniquement robuste, le(s) conducteur(s) optique(s) peu(ven)t alors rompre.

Il existe donc un besoin d'améliorer la conception d'une fiche, destinée à être connectée une embase de boitier d'équipement électronique, afin de remédier à tout ou partie des inconvénients de l'art antérieur cités ci-dessus, notamment en vue d'éviter tout risque de rupture du(de)s conducteur(s) du câble optique sur lequel la fiche est montée.

Le but de l'invention est de répondre au moins en partie à ce besoin.

### Exposé de l'invention

Pour ce faire, l'invention concerne une fiche, destinée à être montée sur au moins un câble optique dont une extrémité supporte un ou plusieurs contacts optiques comprenant chacun une patte déformable élastiquement ou montée pivotante par rapport au reste du contact, comprenant :
- un corps comprenant :
   - une partie avant et qui s'étend selon un axe longitudinal (X), la partie avant étant conformée pour venir se loger dans une embase, la partie avant étant adaptée pour loger et maintenir au moins un convertisseur optoélectronique connecté au(x) contact(s) du câble;
   - une partie arrière formant un fourreau, conformée pour loger l'extrémité du câble supportant elle-même le(s) contact(s) qui est (sont) connectés de manière amovible au(x) convertisseur(s) optoélectronique(s);
- une bague emmanchée autour de la partie avant du corps avec possibilité de coulissement axial selon l'axe (X) vers l'avant de la fiche, la bague supportant une patte avec excroissance s'étendant à l'intérieur de la partie arrière, la patte de la bague et la patte de chaque contact étant agencées relativement entre elles de telle sorte que lorsqu'on exerce un effort de traction pour faire coulisser la bague autour de la partie avant, l'excroissance de la patte de la bague est susceptible de venir en appui contre la patte de chaque contact de sorte à la déformer élastiquement ou à la faire pivoter jusqu'à réaliser la déconnexion entre ledit contact et le(s) convertisseur(s) optoélectronique(s).

Selon un mode de réalisation avantageux, la partie arrière est montée flottante autour de la partie avant du corps de fiche.

Grâce à l'invention, on s'assure aisément par un simple effort de traction sur la bague, d'une déconnexion automatique entre contact(s) optique(s) logés dans la partie arrière et convertisseur optoélectronique dans la partie avant, et sans risque de rupture du conducteur ou des conducteurs optiques, telles que des fibres optiques, du câble optique sur lequel la partie arrière du corps de fiche est montée.

Le montage flottant de la partie avant sur la partie arrière du corps de la fiche, permet en outre à cette partie avant de rester désaxée dans la cavité d'embase, même si la partie arrière du corps tend quant à elle à se réaligner avec ladite cavité, en particulier lors d'un verrouillage de la fiche sur l'embase.

Un avantage subséquent induit par le montage flottant entre partie avant et arrière du corps de fiche est que les éventuelles contraintes mécaniques appliquées sur la partie arrière de la fiche ne sont pas transmises à la partie avant et donc au composant électronique monté sur la carte de l'équipement électronique. Cela est avantageux car un tel composant est particulièrement vulnérable aux efforts mécaniques auxquels il est soumis, en raison de la tenue par brasage sur la surface du circuit imprimé de la carte qui n'est pas apte supporter des efforts importants.

Selon un mode de réalisation avantageux, la partie avant et la bague sont en matériau électriquement conducteur, la bague supportant une pluralité de pattes flexibles réparties à la périphérie de la bague, les pattes flexibles assurant le contact électrique entre le boitier du convertisseur optoélectronique et la paroi interne de l'embase.

Les pattes de contact flexible sur le pourtour de la partie avant du corps de fiche ont une course de flexion suffisante pour que le contact mécanique et donc électrique soit assuré avec la paroi intérieure de la cavité d'embase, même en cas de désalignement maximum. On peut d'ailleurs conférer un jeu important entre la paroi intérieure de la cavité d'embase et la périphérie de la partie avant du corps de fiche, ce qui implique que cette dernière peut se trouver excentrée lors de son logement dans la cavité d'embase. La partie avant du corps de fiche peut être recentrée vers le composant électronique avec lequel elle doit se connecter, grâce à une succession de chanfreins qui la recentre au fur et à mesure de son avancement dans la cavité d'embase.

En étant conductrices, les pattes flexibles assurent une parfaite continuité électrique. La bague supportant les pattes flexibles peuvent être réalisées en métal, par exemple en aluminium ou zamak moulé sous pression revêtu d'une protection anticorrosive, ou encore en matière(s) plastique(s) avec métallisation. Il peut aussi être usiné ou réalisé par une technologie de fabrication additive.

Selon un autre mode de réalisation avantageux, la bague supporte un joint d'étanchéité adapté pour réaliser l'étanchéité à l'interface entre la fiche et l'embase dans laquelle la partie avant du corps de fiche est destinée à se loger. Avec un tel joint, on s'assure d'une parfaite étanchéité à l'interface entre fiche et embase. En outre, l'effort de verrouillage de la fiche sur l'embase peut être transmis efficacement et de manière uniforme au joint afin de le comprimer. Le joint est de préférence porté par la partie avant et peut être en silicone, EPDM ou tout autre matériau polymère satisfaisant aux contraintes d'étanchéité.

L'invention a également pour objet un procédé de déconnexion entre la partie avant et la partie arrière du corps d'une fiche décrite précédemment, comprenant une étape de coulissement axial de la bague vers l'avant de la fiche jusqu'à mettre en appui l'excroissance de la patte de bague contre la(les) patte(s) de contacts optiques puis à provoquer la déformation élastique ou le pivotement de cette(ces) dernière(s) afin de réaliser la déconnexion entre ledit(lesdits) contact(s) et le(s) convertisseur(s) optoélectronique(s).

L'invention permet ainsi d'éviter toute traction sur la fibre optique supportant le ou les contacts optiques et qui pourrait conduire à leur casse. En effet, avec les fiches selon l'état de l'art si un utilisateur tente de démonter le convertisseur du reste de la fiche sans avoir au préalable desserré le presse-étoupe, la fibre optique peut rompre. Avec la fiche selon l'invention, dans une telle situation, si l'utilisateur tire sur la partie avant, il se produit une déconnexion automatique des contacts optiques du convertisseur optoélectronique, et donc un relâchement immédiat de toute contrainte de traction néfaste à la fibre optique.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en perspective d'une fiche optique selon l'invention, la fiche intégrant un convertisseur optoélectronique de type « transceiver SFP » qui fait saillie à l'avant de la fiche;
- la figure 2 est une vue en éclaté de la fiche selon la figure 1 ;
- la figure 3 est une vue en coupe longitudinale partielle de la fiche selon les figures 1 et 2;
- la figure 3A est une vue de détail du dessus de la fiche selon l'une des figures 1 à 3 montrant le montage flottant de la partie arrière du corps de fiche autour de sa partie avant;
- la figure 4 est une vue en perspective d'un exemple de contacts optiques, de type LC, destinés à être connectés à un convertisseur optoélectronique de la fiche optique selon l'invention;
- les figures 5A à 5E montrent en vue de coupe longitudinale les différentes étapes de démontage de la partie avant du corps d'une fiche optique selon l'invention, de sa partie arrière, ce démontage permettant une déconnexion automatique entre convertisseur optoélectronique maintenu dans la partie avant et les contacts optiques logés et maintenus dans la partie arrière ;
- la figure 6 est une vue en coupe longitudinale partielle d'une fiche les figures 1 à 3A telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique.

On précise que les termes « avant » et « arrière» se réfèrent à une fiche selon l'invention dans sa configuration montée sur un câble optique. Ainsi, la partie avant du corps de fiche est celle située du côté de son extrémité libre tandis que la partie arrière est celle située du côté par lequel le câble optique est logé et retenu dans la fiche.

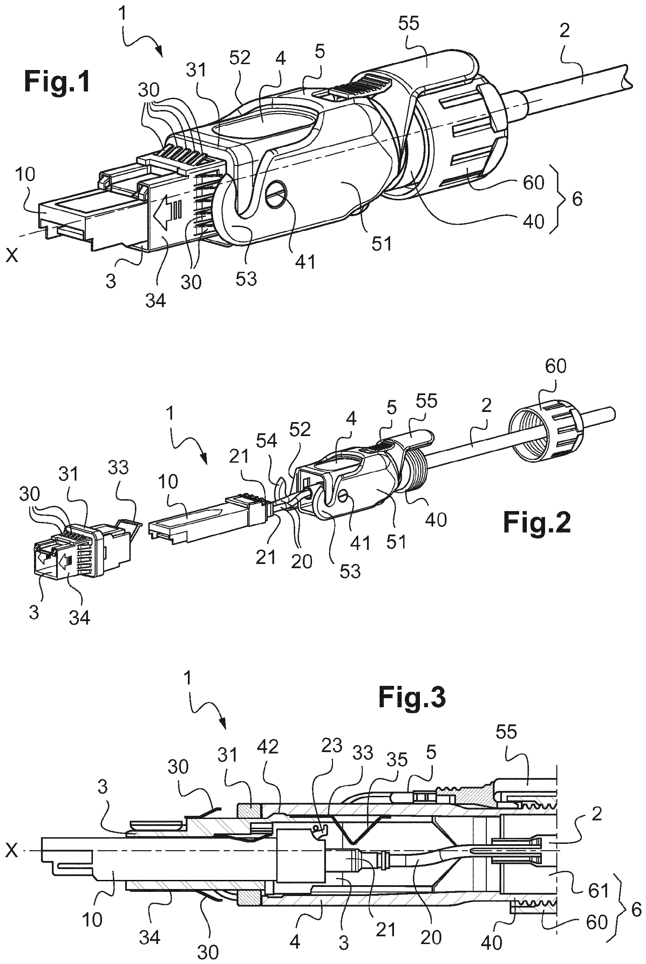

On a représenté sur les figures 1 à 3A, une fiche optique désignée globalement par 1 selon un premier exemple de mise en oeuvre de l'invention.

Cette fiche optique 1 est destinée à être connectée à une embase 7 monobloc avec un panneau 80 d'un boitier d'équipement électronique 8 configuré pour recevoir une pluralité de signaux optique, électrique, de puissance, ou toute combinaison de ces signaux.

Cette fiche 1 peut être configurée pour être montée sur un unique câble optique 2 qui peut ne comporter que des conducteurs optiques 20.

Chaque extrémité libre d'un conducteur optique 20 du câble 2, notamment une fibre optique, supporte un contact optique 21.

La fiche 1 comporte un corps qui s'étend selon un axe longitudinal rectiligne X.

Comme décrit et revendiqué dans la demande de brevet déposée ce jour au nom de la demanderesse et intitulée « *Fiche de connexion à une embase d'un panneau de boitier d'équipement électronique, munie de moyens d'auto-alignement* », le corps de la fiche 1 est réalisé en deux pièces 3, 4, dont l'une constitue la partie avant 3 et l'autre, la partie arrière 4.

Un convertisseur optoélectronique 10, encore appelé *transceiver* en anglais, peut être fixé de manière amovible et interchangeable à l'intérieur d'un logement de la partie avant 3 du corps prévu à cet effet. Le *transceiver* 10 fait saillie au-delà de la partie avant 3 du corps de fiche.

Dans l'exemple illustré, le convertisseur optoélectronique 10 est au contact de la partie avant 3 du corps de la fiche 1, de telle sorte que le boîtier de ce convertisseur optoélectronique 10 est au même potentiel électrique que cette partie avant 3.

Le ou les contacts optiques 21 peuvent être reliés à une extrémité à un conducteur optique 20, et être connectés à leur autre extrémité à une entrée du *transceiver* 10. Les contacts optiques 21 sont par exemple des contacts de type LC et le convertisseur optoélectronique 10 est par exemple un transceiver de type SFP.

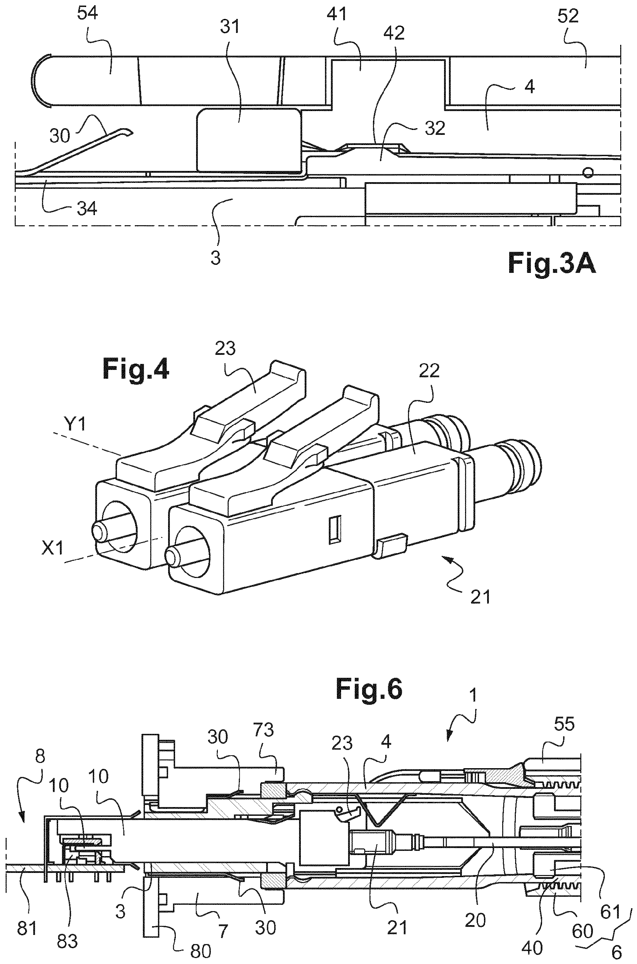

Comme représenté sur la figure 4, chaque contact optique 21 peut comporter au moins une patte 23 ménagée sur sa surface supérieure 22, la patte 23 étant déformable élastiquement autour d'un axe Y1 perpendiculaire à l'axe longitudinal X1 du contact. Un appui sur cette patte 23 provoque sa déformation élastique orthogonalement au plan X1-Y1, ce qui permet de libérer le contact optique 21 d'un élément de connexion complémentaire, en particulier un convertisseur optoélectronique, avec lequel il est connecté. En configuration logée à l'intérieur de la partie arrière 4 du corps de fiche et connecté au convertisseur optoélectronique 10, l'axe X1 du contact optique 21 est confondu avec l'axe longitudinal X du corps de fiche.

Dans l'exemple illustré en figures 1 à 3A, deux contacts optiques identiques de type LC sont connectés chacun d'une part à un conducteur optique 20 du câble optique 2 et d'autre part au convertisseur optoélectronique 10.

La partie avant 3 du corps de fiche peut être réalisée par exemple en aluminium moulé ou zamak moulé sous pression, revêtu d'une protection anticorrosive ou encore en matière(s) plastique(s), avec métallisation.

Selon l'invention, une bague 34 en matériau conducteur électrique est emmanchée autour de la partie avant 3 du corps, avec la possibilité d'un coulissement axial sur cette partie avant 3.

Cette bague 34 supporte une patte 33 avec une excroissance 35. La patte 33 épouse sur une majeure partie de sa longueur la paroi intérieure de la partie arrière 4, et son excroissance 35 est orientée vers l'intérieur de la partie arrière 4. En lieu et place, d'une partie recourbée de la patte 33 qui forme l'excroissance 5, on peut prévoir un plot ou même un simple plan incliné solidaire de la patte 33.

La bague 34 supporte en outre une pluralité de pattes flexibles 30 en matériau conducteur électrique, réparties à la périphérie extérieure de la partie avant 3 du corps.

Ces pattes flexibles 30 sont adaptées pour rester en contact mécanique avec l'intérieur de l'embase 7, lorsque la partie avant 3 du corps est logée dans cette dernière.

Un joint d'étanchéité 31 peut avantageusement être réalisé intégralement avec la partie avant 3. Ce joint 31 permet de réaliser l'étanchéité à l'interface entre la fiche 1 et l'embase 7 dans laquelle la partie avant du corps de fiche est destinée à se loger lors de la connexion.

La partie arrière 4 quant à elle forme un fourreau, conformé pour loger l'extrémité des conducteurs optiques 20 du câble 2 supportant elle-même les contacts 21.

La partie arrière 4 peut être réalisée par exemple en matière plastique.

La partie arrière 4 est montée flottante autour de la partie avant 3.

Une variante avantageuse pour réaliser un tel montage flottant est visible en figure 3A : deux protubérances 32 réparties de part et d'autre de la partie avant 3 sont chacune montée avec un ajustement libre dans une gorge 42 ménagée à cet effet sur un côté de la partie arrière 4 le long duquel un crochet de verrouillage 53, 54 peut pivoter.

Avec le montage flottant entre partie avant 3 et partie arrière 4 du corps de fiche 1, la partie avant 3 peut rester désaxée dans la cavité d'embase 7 même si la partie arrière 4 du corps tend à se réaligner avec cette dernière, en particulier lors d'un verrouillage au moyen d'un levier 5 explicité ci-après.

En outre, la présence des pattes flexibles 30 assure à coup sûr la continuité de contact entre partie avant 3 et embase 7, même en cas de désalignement maximum entre la partie avant 3 et le composant électronique 81 supportée par la carte électronique 82 de l'équipement électronique 8 auquel la fiche 1 est connectée.

Comme illustré en figure 1 à 3, un levier de verrouillage 5 à deux bras 51, 52 est monté pivotant autour d'un axe 41 sur la partie arrière 4 du corps de la fiche. L'axe de pivotement 41 peut être moulé intégralement avec la partie arrière 41.

L'extrémité libre de chaque bras 51, 52 comporte un crochet de verrouillage 53,54.

Le levier 5 peut être conformé avec une partie de préhension 55 qui permet de réaliser manuellement, de manière aisée, le pivotement du levier 5 autour de l'axe 41.

La fiche 1 comporte encore dans l'exemple décrit un presse-étoupe 6 de rétention du câble 2. Le presse-étoupe comprend un écrou 60, par exemple réalisé en matière plastique, destiné à se visser sur la partie arrière 4 du corps de la fiche 2.

Dans l'exemple illustré, l'écrou 60 comprend un filetage intérieur destiné à être vissé autour du filetage extérieur de l'extrémité arrière 40 de la partie arrière 4 du corps de la fiche 1, le vissage provoquant la compression d'un joint d'étanchéité 61 agencé autour du câble 2.

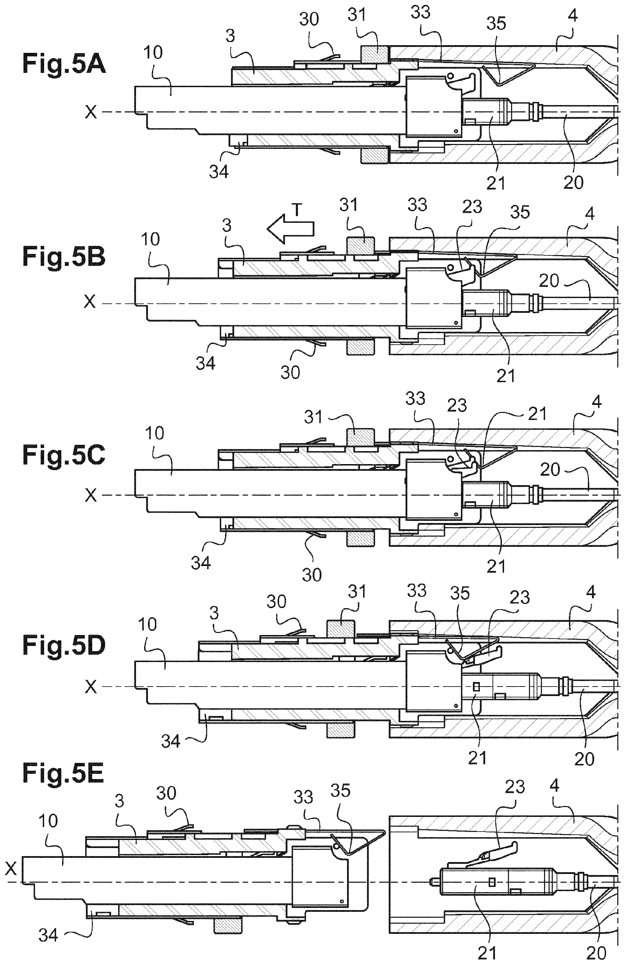

On décrit maintenant en référence aux figures 5A à 5E, les opérations de déconnexion entre partie avant 3 et partie arrière 4 du corps de fiche 1, qui permettent une déconnexion automatique entre convertisseur optoélectronique 10 et contacts optiques 21.

La figure 5A montre la configuration assemblée de la fiche 1 : la partie arrière 4 est montée flottante autour de la partie avant 3 du corps de fiche. Les contacts optiques 21 sont connectés au convertisseur optoélectronique 10 qui fait saillie au-delà de la partie avant 3.

La bague 34 est montée coulissante autour de la partie avant 3 avec le joint d'étanchéité 31 en appui contre l'extrémité avant de la partie arrière 3 du corps de fiche.

Les pattes 23 des contacts optiques 21 ne sont pas sollicitées mécaniquement et s'étendent à l'intérieur de la partie arrière 4 vers le haut.

La patte 33 de la bague 34 n'est également pas sollicitée mécaniquement et s'étend à l'intérieur de la partie arrière 4. Plus précisément, une majeure partie de la longueur de la patte 33 épouse la paroi intérieure de la partie arrière 4, et l'excroissance 35 à l'extrémité libre de la patte 33 est orientée vers l'intérieur de la partie arrière 4.

Pour démonter la partie avant 3 de la partie arrière 4 du corps de fiche, un utilisateur exerce un effort de traction sur la bague 34 afin de la faire coulisser sur la partie avant 3 (flèche T sur la figure 5B). Dans un premier temps, ce coulissement vient mettre en appui l'excroissance 35 de la patte 33 contre la patte 23 de chaque contact 21 (figure 5B).

Lorsque l'utilisateur continue à faire coulisser la bague 34 autour de la partie avant 3, l'excroissance 35 de la patte 33 continue à appuyer la patte 23 de chaque contact 21 et provoque ainsi sa flexion (figure 5C) et donc son pivotement jusqu'à provoquer la déconnexion entre ledit contact 21 et le convertisseur optoélectronique 10 (figure 5D).

Une fois cette déconnexion réalisée, la partie avant 3 avec la bague 3 autour est séparée de la partie arrière 4 du corps de fiche 1 (figure 5E).

La figure 6 illustre la fiche 1 de l'invention selon les figures 1 à 3 en configuration de connexion et de verrouillage à une embase 7 d'un panneau 80 d'équipement électronique 8 dont le composant électronique 83 aux contacts 82 connectés au convertisseur 10 est porté par la carte imprimé 84.

Sur cette figure 6, on voit en outre que l'embase comporte des lèvres 73 qui tendent à bien protéger mécaniquement le joint d'étanchéité 31. Ainsi, celui-ci est moins exposé directement à la lumière UV et aux intempéries.

Les fiches selon l'invention et des embases auxquelles elles peuvent être connectées peuvent être configurées pour fonctionner à des températures comprise entre -40°C et +125°C.

En termes d'étanchéité, les fiches selon l'invention et/ou les embases peuvent satisfaire la norme IP65, IP 67, IP68 ou UL50E.

La fiche 1 selon l'invention qui vient d'être décrite peut loger et maintenir dans sa partie avant 3, n'importe quel connecteur connu.

D'autres variantes et avantages de l'invention peuvent être réalisés sans pour autant sortir du cadre de l'invention.

Ainsi, si dans les modes de réalisation illustrés, les contacts optiques 21 sont prévus avec des pattes 23 déformables élastiquement dont la fonction est de permettre leur déconnexion lorsqu'ils sont connectés au convertisseur optoélectronique 10, l'invention peut aussi être mise en oeuvre avec des contacts optiques 21 avec pour chacun une patte 23 montée pivotante autour du reste du contact 21 autour de l'axe Y1.

L'invention n'est pas limitée aux exemples qui viennent d'être décrits ; on peut notamment combiner entre elles des caractéristiques des exemples illustrés au sein de variantes non illustrées.

## Revendications

1. Fiche (1), destinée à être montée sur au moins un câble optique (2) dont une extrémité supporte un ou plusieurs contacts optiques (21) comprenant chacun une patte (23) déformable élastiquement ou montée pivotante par rapport au reste du contact, comprenant :
- un corps comprenant :
• une partie avant (3) et qui s'étend selon un axe longitudinal (X), la partie avant étant conformée pour venir se loger dans une embase (7), la partie avant étant adaptée pour loger et maintenir au moins un convertisseur optoélectronique (10) connecté au(x) contact(s) (21) du câble;
• une partie arrière (4) formant un fourreau, conformée pour loger l'extrémité du câble supportant elle-même le(s) contact(s) qui est (sont) connectés de manière amovible au(x) convertisseur(s) optoélectronique(s) (10);
- une bague (34) emmanchée autour de la partie avant (3) du corps avec possibilité de coulissement axial selon l'axe (X) vers l'avant de la fiche, la bague supportant une patte (33) avec excroissance (35) s'étendant à l'intérieur de la partie arrière (4), la patte de la bague et la patte de chaque contact étant agencées relativement entre elles de telle sorte que lorsqu'on exerce un effort de traction pour faire coulisser la bague (34) autour de la partie avant (3), l'excroissance de la patte (33) de la bague est susceptible de venir en appui contre la patte (23) de chaque contact de sorte à la déformer élastiquement ou à la faire pivoter jusqu'à réaliser la déconnexion entre ledit contact (21) et le(s) convertisseur(s) optoélectronique(s) (10).

2. Fiche (1) selon la revendication 1, la partie arrière (4) étant montée flottante autour de la partie avant (3) du corps de fiche.

3. Fiche (1) selon la revendication 1 ou 2, la partie avant (3) et la bague (34) étant en matériau électriquement conducteur, la bague (34) supportant une pluralité de pattes flexibles (30) réparties à la périphérie de la bague, les pattes flexibles (30) assurant le contact électrique entre le boitier du convertisseur optoélectronique et la paroi interne de l'embase.

4. Fiche (1) selon l'une des revendications précédentes, la bague (34) supportant un joint d'étanchéité (31) adapté pour réaliser l'étanchéité à l'interface entre la fiche (1) et l'embase (7) dans laquelle la partie avant du corps de fiche est destinée à se loger.

5. Procédé de déconnexion entre la partie avant (3) et la partie arrière (4) du corps d'une fiche selon l'une des revendications précédentes, comprenant une étape de coulissement axial de la bague (34) vers l'avant de la fiche jusqu'à mettre en appui l'excroissance (35) de la patte (33) de bague contre la(les) patte(s) (23) de contacts optiques (21) puis à provoquer la déformation élastique ou le pivotement de cette(ces) dernière(s), afin de réaliser la déconnexion entre ledit(lesdits) contact(s) (21) et le(s) convertisseur(s) optoélectronique(s) (10).

## Patentansprüche

1. Stecker (1), der dazu bestimmt ist, an wenigstens einem optischen Kabel (2) montiert zu werden, dessen eines Ende einen oder mehrere optische Kontakte (21) trägt, die jeweils eine elastisch verformbare oder in Bezug auf den Rest des Kontakts schwenkbar montierte Klauen aufweisen, mit:
- einem Körper, der aufweist:
einen vorderen Teil (3), der sich in Richtung einer Längsachse (X) erstreckt, wobei der vordere Teil dazu ausgebildet ist, in einen Sockel (7) einzugreifen, wobei der vordere Teil dazu eingerichtet ist, wenigstens einen optoelektronischen Wandler (10) aufzunehmen und zu halten, der mit dem Kontakt (21) oder den Kontakten des Kabels verbunden ist,
einen hinteren Teil (4) der ein Futter bildet, ausgebildet zur Aufnahme des Endes des Kabels, das seinerseits den Kontakt oder die Kontakte trägt, der (die) lösbar mit dem oder den optoelektronischen Wandlern (10) verbunden ist (sind);
- einem Ring (34), der den vorderen Teil (3) des Körpers umschließt, mit der Möglichkeit einer axialen Gleitbewegung in Richtung der Achse (X) zum vorderen Ende des Steckers, wobei der Ring eine Klaue (33) mit einer Ausstülpung (35) aufweist, die sich in das Innere des hinteren Teils (4) erstreckt, wobei die Klaue des Ringes und die Klaue jedes Kontakts so relativ zueinander angeordnet sind, dass, wenn man eine Zugkraft ausübt, um den Ring (34) auf dem vorderen Teil (3) zu verschieben, die Ausstülpung der Klaue (33) des Ringes in der Lage ist, an der Klaue (23) jedes Kontakts in der Weise in Anlage zu kommen, dass die Klaue des Kontakts elastisch verformt wird oder verschwenkt wird, bis die Verbindung zwischen dem genannten Kontakt (21) und dem optoelektronischen Wandler (10) oder den optoelektronischen Wandlern gelöst ist.

2. Stecker (1) nach Anspruch 1, bei dem der hintere Teil (4) schwimmend auf dem vorderen Teil (3) des Körpers des Steckers montiert ist.

3. Stecker (1) nach Anspruch 1 oder 2, bei dem der vordere Teil (3) und der Ring (34) aus einem elektrisch leitfähigen Material gebildet sind, der Ring (34) mehrere flexible Klauen (30) trägt, die auf dem Umfang des Ringes verteilt sind, und die flexiblen Klauen (30) den elektrischen Kontakt zwischen dem Gehäuse des optoelektronischen Wandlers und der Innenwand des Sockels herstellen.

4. Stecker (1) nach einem der vorstehenden Ansprüche, bei dem der Ring (34) eine Dichtung (31) trägt, die dazu eingerichtet ist, die Fuge zwischen dem Stecker (1) und dem Sockel (7) abzudichten, in welchen der vordere Teil des Körpers des Steckers einzustecken ist.

5. Verfahren zum Lösen der Verbindung zwischen dem vorderen Teil (3) und dem hinteren Teil (4) des Körpers eines Steckers nach einem der vorstehenden Ansprüche, mit einem Schritt der axialen Verschiebung des Ringes (34) zum vorderen Ende des Steckers, bis die Ausstülpung (35) der Klaue (33) des Ringes an der Klaue (23) oder den Klauen der optischen Kontakte (21) zur Anlage kommt, um dann die elastische Verformung oder Verschwenkung dieses Kontakts oder dieser Klauen zu bewirken, um die Verbindung zwischen dem Kontakt (21) oder den Kontakten und dem oder den optoelektronischen Wandlern (10) zu trennen.

## Claims

1. A plug (1), designed to be mounted on at least one optical cable (2), whose one end bears one or more optical contacts (21), each one having a tab (23) which is deformable elastically or mounted so as to pivot relative to the rest of the contact, comprising:
- a body having:
• a front part (3) extending along a longitudinal axis (X), the front part being designed to fit into a socket (7), the front part being adapted to hold and support at least one optoelectronic converter (10) connected to the contact(s) (21) of the cable;
• a rear part (4) forming a sheath, designed to receive the end of the cable itself bearing the contact(s) which is (are) connected in removable manner to the optoelectronic converter(s) (10);
- a bushing (34) fitted around the front part (3) of the body with possibility of axial sliding along the (X) axis toward the front of the plug, the bushing bearing a tab (33) with an appendage (35) extending inside the rear part (4), the tab of the bushing and the tab of each contact being disposed relative to each other so that when a traction force is applied to make the bushing (34) slide around the front part (3), the appendage of the tab (33) of the bushing is able to bear against the tab (23) of each contact so as to deform it elastically or make it pivot until the disconnection is produced between said contact (21) and the optoelectronic converter(s) (10).

2. The plug (1) according to Claim 1, the rear part (4) being mounted floating about the front part (3) of the plug body.

3. The plug (1) according to Claim 1 or 2, the front part (3) and the bushing (34) being made of electrically conductive material, the bushing (34) bearing a plurality of flexible tabs (30) distributed on the periphery of the bushing, the flexible tabs (30) ensuring the electrical contact between the housing of the optoelectronic converter and the inner wall of the socket.

4. The plug (1) according to one of the preceding claims, the bushing (34) carrying a seal (31) adapted to produce tightness at the interface between the plug (1) and the socket (7) in which the front part of the plug body is designed to be seated.

5. Method of disconnection between the front part (3) and the rear part (4) of the body of a plug according to one of the preceding claims, involving a step of axial sliding of the bushing (34) toward the front of the plug until it presses the appendage (35) of the bushing tab (33) against the optical contacts (21) tab(s) (23) and then causes the elastic deformation or pivoting of the latter in order to achieve the disconnection between said contact(s) (21) and the optoelectronic converter(s) (10).
